# DEMANDE DE BREVET EUROPEEN

(11) **EP 4 372 183 A1**
(43) Date de publication de la demande: **22.05.2024**
(21) Numéro de dépôt: 23209331.0
(22) Date de dépôt: 13.11.2023
(51) Int. Cl.: E04H 4/12

(54) **SYSTÈME ET PROCÉDÉ DE THERMORÉGULATION D'UN BASSIN DE BAIGNADE**

(30) Priorité: 14.11.2022 FR 2211825
(71) Demandeur: POLYTROPIC, 69390 Vourles (FR)
(72) Inventeur: FILLOT, Jean-Christophe, 69230 ST GENIS LAVAL (FR); GRANIER, Fabrice, 69330 MEYZIEU (FR)
(74) Mandataire: Lavoix

(57) **Abrégé**

Ce système comprend une unité de production de chaleur (101) pour chauffer l'eau (1) du bassin de baignade (2), un raccordement électrique (102), un générateur d'électricité renouvelable (103), photovoltaïque et/ou éolien, le système (100) étant configuré pour basculer entre un mode secteur et un mode renouvelable, un capteur de température (104), et une unité de commande (105). Lorsque le système est en mode renouvelable et tant que la température courante est inférieure à une température maximale prédéterminée, l'unité commande l'unité de production de chaleur pour chauffer l'eau. Lorsque le système est en mode secteur et tant que la température courante est inférieure à une température minimale prédéterminée, l'unité commande l'unité de production de chaleur pour chauffer l'eau, la température minimale prédéterminée étant inférieure à la température maximale prédéterminée. Lorsque le système est en mode renouvelable et que la température courante devient inférieure à la température minimale, l'unité fait basculer le système en mode secteur. Lorsque le système est en mode secteur et que la température courante devient supérieure à la température minimale, l'unité fait basculer le système en mode renouvelable.

## Description

La présente invention concerne un système de thermorégulation d'un bassin de baignade, une installation comprenant un tel système de thermorégulation et un procédé de thermorégulation d'un bassin de baignade au moyen d'un un tel système.

La régulation thermique des bassins de baignade, tels que des piscines ou des spas, est en général assurée via une unité de thermorégulation électrique, raccordée à une source d'électricité collective, autrement dit, au secteur. Cette régulation thermique peut entraîner des coûts élevés pour les utilisateurs de ces bassins de baignade, ainsi qu'une empreinte carbone importante, l'électricité du secteur n'étant pas toujours décarbonée. Pour réduire la consommation d'énergie fossile, il est connu d'utiliser des énergies renouvelables pour alimenter l'unité de thermorégulation électrique, par exemple l'énergie solaire au moyen de panneaux photovoltaïques. Cependant, l'utilisation d'énergies renouvelables est soumise à plusieurs contraintes, notamment l'intermittence de ces énergies, et, dans le cas de l'énergie solaire, de l'intermittence de l'ensoleillement, causée bien entendu par l'alternance jour-nuit, mais également par les conditions météorologiques changeantes. Pour les systèmes sans moyen de stockage de l'électricité produite, cela crée une intermittence de la disponibilité de l'électricité, rendant difficile le maintien d'une température stable de l'eau du bassin de baignade.

Le but de la présente invention est de remédier aux inconvénients expliqués ci-dessus, en proposant un nouveau système de thermorégulation permettant d'obtenir une température satisfaisante à l'aide d'une énergie décarbonée, en dépit de l'intermittence de sa production, limitant le recours à l'électricité d'une source collective d'électricité.

A cet effet, l'invention a pour objet un système de thermorégulation de bassin de baignade contenant de l'eau, le système comprenant :
- une unité de production de chaleur, pour chauffer l'eau du bassin de baignade, lorsque l'unité de production de chaleur est alimentée électriquement,
- un raccordement électrique, le système étant configuré pour fonctionner dans un mode secteur dans lequel une source collective d'électricité alimente l'unité de production de chaleur, par l'intermédiaire du raccordement électrique,
- un générateur d'électricité renouvelable, photovoltaïque et/ou éolien, le système étant configuré pour basculer entre le mode secteur et un mode renouvelable dans lequel le générateur d'électricité renouvelable alimente électriquement l'unité de production de chaleur et dans lequel l'unité de production de chaleur n'est pas alimentée par la source collective d'électricité,
- un capteur de température, pour mesurer une température courante de l'eau du bassin de baignade, et
- une unité de commande qui :
   - lorsque le système est en mode renouvelable et tant que la température courante est inférieure à une température maximale prédéterminée, commande l'unité de production de chaleur pour chauffer l'eau du bassin de baignade,
   - lorsque le système est en mode secteur et tant que la température courante est inférieure à une température minimale prédéterminée, commande l'unité de production de chaleur pour chauffer l'eau du bassin de baignade, la température minimale prédéterminée étant inférieure à la température maximale prédéterminée,
   - lorsque le système est en mode renouvelable et que la température courante devient inférieure à la température minimale, fait basculer le système en mode secteur, et
   - lorsque le système est en mode secteur et que la température courante devient supérieure à la température minimale, fait basculer le système en mode renouvelable.

Une idée à la base de l'invention, pour obtenir la température souhaitée pour l'eau du bassin de baignade, est de combiner une source collective d'électricité et un générateur d'électricité renouvelable. Ainsi, la source collective d'électricité prend le relais en cas d'indisponibilité de l'électricité issue du générateur d'électricité renouvelable et si la température courante devient inférieure à la température minimale, afin de chauffer l'eau du bassin de baignade et permettre à la température courante de redevenir supérieure à la température minimale. Les inconvénients dus à l'intermittence de la production d'électricité renouvelable sont ainsi résolus grâce à l'utilisation combinée d'électricité renouvelable et d'électricité provenant de la source collective. Le recours à l'électricité collective est limité grâce à la surchauffe de l'eau du bassin de baignade jusqu'à la température maximale. En effet, lorsque l'électricité renouvelable n'est plus disponible, la température courante redescend, mais met du temps à atteindre la température minimale. Cela permet de ne pas chauffer avec l'électricité issue de la source collective pendant tout l'intervalle où la température courante est supérieure à la température minimale. Autrement dit, on utilise l'eau du bassin de baignade comme moyen de stockage de chaleur, afin d'éviter de recourir à l'électricité issue de la source collective, en dépit de l'intermittence de la production du générateur d'électricité renouvelable.

Le système peut comprendre l'une ou plusieurs des caractéristiques suivantes, prises isolément ou suivant toute combinaison techniquement possible :
- Le générateur d'électricité renouvelable est un générateur photovoltaïque.
- L'unité de production de chaleur est une pompe à chaleur.
- Le système comprend une unité de refroidissement, alimentée électriquement par le générateur d'électricité renouvelable, pour refroidir l'eau du bassin de baignade lorsque la température courante est supérieure à la température maximale.
- L'unité de refroidissement et l'unité de production de chaleur sont formées par un même dispositif thermo-générateur, de préférence une pompe à chaleur, qui est apte à fonctionner alternativement selon un mode de production de chaleur et selon un mode de refroidissement.

La présente invention a également pour objet une installation comprenant le système de régulation tel que décrit ci-dessus, ainsi que le bassin de baignade.

L'installation peut comprendre l'une ou plusieurs des caractéristiques suivantes, prises isolément ou suivant toute combinaison techniquement possible :
- le bassin de baignade est une piscine.
- En mode renouvelable, lorsque la température maximale est atteinte, le générateur d'électricité renouvelable alimente électriquement des équipements électriques domestiques.
- Les équipements électriques domestiques comprennent des appareils de pompage, de filtration et de traitement de l'eau du bassin de baignade et/ou des appareils électroménagers.

La présente invention a également pour objet un procédé de thermorégulation d'un bassin de baignade contenant de l'eau, au moyen du système tel défini ci-dessus. Le procédé comprend :
- une étape de chauffage du bassin de baignade par l'unité de production de chaleur sur commande de l'unité de commande, lorsque le système est en mode renouvelable et tant que la température courante est inférieure à la température maximale,
- une étape de chauffage du bassin de baignade par l'unité de production de chaleur sur commande de l'unité de commande, lorsque le système est en mode secteur et tant que la température courante est inférieure à la température minimale,
- une étape de basculement du mode renouvelable au mode secteur lorsque la température courante devient inférieure à la température minimale, et
- une étape de basculement du mode secteur au mode renouvelable lorsque la température courante devient supérieure à la température minimale

Le procédé d'utilisation peut comprendre l'une des caractéristiques suivantes, prises isolément ou selon toute combinaison techniquement possible :
- Le procédé comprend en outre une étape de définition d'une température de consigne par un utilisateur, une étape de définition d'une tolérance par l'utilisateur et une étape de calcul des températures minimale et maximales, respectivement en soustrayant la tolérance à la température de consigne, et en ajoutant la tolérance à la température de consigne
- Le procédé comprend en outre une étape de refroidissement de l'eau du bassin de baignade lorsque la température courante est supérieure à la température maximale.
- Le procédé comprend en outre, lorsque le système est en mode renouvelable et que la température maximale de l'eau du bassin de baignade est atteinte, une étape d'alimentation par le générateur d'électricité renouvelable d'équipements électriques domestiques.

L'invention sera mieux comprise à la lecture de la description qui va suivre, donnée uniquement à titre d'exemple et faite en se référant aux dessins sur lesquels :
- [Fig 1] la figure 1 est un schéma représentant une installation selon l'invention
- [Fig 2] la figure 2 est un graphe expliquant les différentes étapes d'un procédé de thermorégulation, pour l'installation de la figure 1.

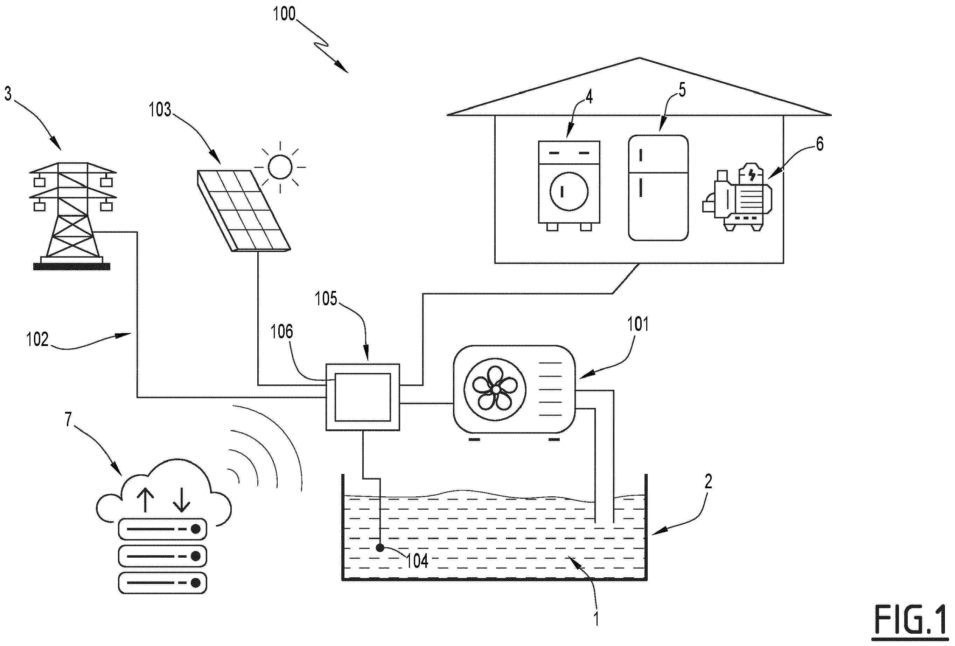

Sur la figure 1 est représentée une installation comprenant un système de thermorégulation 100, pour un bassin de baignade 2. Par exemple, le bassin de baignade 2 peut être une piscine, un spa, ou tout autre bassin enterré ou hors sol destiné à la baignade en extérieur, ou sous abri. Le bassin 2 contient de l'eau 1, dans laquelle une ou plusieurs personnes peuvent se baigner et/ou nager. Le système de thermorégulation 100 vise à réguler une température courante Tc de l'eau 1.

Le système 100 comporte un dispositif thermo-générateur 101, un raccordement électrique 102, un générateur d'électricité renouvelable 103, un capteur de température 104 et une unité de commande 105.

Le dispositif thermo-générateur 101 forme une unité de production de chaleur. Le dispositif thermo-générateur 101 peut avantageusement également former une unité de refroidissement. Le dispositif thermo-générateur 101 peut, par exemple, et ainsi que représenté figure 1, être une pompe à chaleur, qui peut fonctionner selon un mode de production de chaleur et un mode de refroidissement, pour à la fois former l'unité de production de chaleur et l'unité de refroidissement.

Lorsqu'il est alimenté électriquement, le dispositif thermo-générateur 101, ou pour le moins, l'unité de production de chaleur, a pour fonction de chauffer l'eau 1 du bassin de baignade 2, c'est-à-dire faire augmenter la température courante Tc. On peut aussi prévoir que, lorsqu'alimenté électriquement, le dispositif thermo-générateur 101, ou pour le moins l'unité de refroidissement, peut refroidir l'eau 1 du bassin de baignade 2, c'est-à-dire faire baisser la température courante Tc. En pratique, le dispositif thermo-générateur 101 peut comprendre un échangeur de chaleur qui fournit de la chaleur à l'eau 1 pour la chauffer, ou retire de la chaleur à l'eau 1 pour la refroidir.

Le raccordement électrique 102 relie le système 100, à une source collective d'électricité 3, afin d'alimenter le système 100 en électricité depuis la source collective d'électricité 3. En particulier, le raccordement électrique 102 sert à alimenter électriquement le dispositif thermo-générateur 101, afin qu'il chauffe l'eau 1 du bassin de baignade 2 et éventuellement, afin qu'il refroidisse l'eau 1 du bassin de baignade 2. La source collective d'électricité 3 peut être un réseau de distribution basse tension.

Le générateur d'électricité renouvelable 103 peut comporter au moins un panneau photovoltaïque, et ainsi constituer un générateur photovoltaïque. De manière alternative ou complémentaire, le générateur d'électricité renouvelable 103 peut comporter au moins une éolienne et ainsi constituer un générateur éolien.

Le générateur d'électricité renouvelable 103 est configuré pour alimenter électriquement le dispositif thermo-générateur 101, afin qu'il chauffe l'eau 1 du bassin de baignade 2 et éventuellement, afin qu'il refroidisse l'eau 1 du bassin de baignade 2. De préférence, le générateur d'électricité renouvelable 103 peut aussi être configuré pour alimenter électriquement des équipements électriques domestiques 4 et 5. Bien entendu, un plus grand nombre d'équipements électriques domestiques que 4 et 5 peuvent être alimentés, les équipements électriques domestiques pouvant être de manière non limitative, des équipements électroménagers tels que des réfrigérateurs, des machines à laver, des systèmes d'éclairage, mais également des appareils permettant le fonctionnement du bassin de baignade 2, tels que des appareils 6 de pompage, de filtration et de traitement de l'eau 1.

Le capteur de température 104 mesure la température courante Tc de l'eau 1 du bassin de baignade 2. Le capteur de température 104 peut être un capteur filaire ou sans fil.

Avantageusement, l'unité de commande 105 est alimentée par le générateur d'électricité renouvelable 103 et par la source collective d'électricité 3 par l'intermédiaire du raccordement électrique 102, et alimente le dispositif thermo-générateur 101, de sorte que le dispositif thermo-générateur 101 est alimenté électriquement par le générateur d'électricité renouvelable 103 et/ou la source collective d'électricité 3 par l'intermédiaire de l'unité de commande 105.

L'unité de commande 105 contrôle la température courante Tc de l'eau 1 du bassin de baignade 2 par l'intermédiaire du capteur de température 104, par exemple en étant reliée filairement ou sans fil au capteur de température 104. En fonction de la valeur de la température courante Tc mesurée, l'unité de commande 105 commande le dispositif thermo-générateur 101 pour chauffer l'eau 1 du bassin de baignade 2, ou éventuellement, pour refroidir l'eau 1 du bassin de baignade 2. L'unité de commande 105 détermine également par quel moyen le dispositif thermo-générateur 101 est électriquement alimenté, à savoir par le générateur d'électricité renouvelable 103, par la source collective d'électricité 3, ou éventuellement par les deux à la fois. L'unité de commande 105 peut commander au générateur d'électricité renouvelable 103 d'alimenter électriquement des équipements électriques domestiques 4, 5 et/ou 6, alternativement ou en plus du dispositif thermo-générateur 101.

L'unité de commande 105 peut comporter ou être associée à une interface 106 permettant de suivre l'évolution du système 100 et, avantageusement, pour qu'un utilisateur puisse entrer des paramètres de commande du système 100. L'interface 106 peut être formée par une application exécutée sur un terminal mobile, par exemple un smartphone, dont dispose l'utilisateur. Alternativement ou de surcroît, l'interface 106 peut se présenter sous la forme d'une borne fixe, disposé à proximité du bassin 2. L'interface 106 peut avantageusement servir à l'utilisateur pour visualiser l'ensemble des données du système 100, notamment la température courante Tc mesurée par le capteur de température 104, l'alimentation électrique du système 100, ainsi que le mode de fonctionnement courant du dispositif thermo-générateur 101. L'unité de commande 105 peut être une carte électronique, une application disponible sur ordinateur ou smartphone. Tout ou partie de l'unité de commande 105 peut avantageusement être un serveur dématérialisé dans un cloud 7. Dans ce cas, le serveur peut héberger une intelligence artificielle.

Le système 100 est configuré pour basculer entre deux modes de fonctionnement : un mode secteur, dans lequel le système 100 est alimenté électriquement par une source collective d'électricité 3 via le raccordement électrique 102, et un mode renouvelable, dans lequel le générateur d'électricité renouvelable 103 alimente le dispositif thermo-générateur 101, notamment l'unité de production de chaleur, l'unité de production chaleur n'étant alors pas alimentée par la source collective d'électricité 3. Le générateur d'électricité renouvelable 103 ne peut fonctionner que lorsqu'une source d'énergie renouvelable correspondante, par exemple, le soleil, si le générateur 103 est photovoltaïque, ou le vent, si le générateur 103 est éolien, est disponible. Ainsi, le générateur 103 ne peut alimenter électriquement le dispositif 101 que lorsque la source d'énergie renouvelable est disponible. Dans l'éventualité où la source d'énergie renouvelable n'est pas disponible ou est trop faible, il est donc intéressant de complémenter l'alimentation électrique fournie par le générateur renouvelable 103 par celle fournie par la source collective d'électricité 3, pour alimenter électriquement le dispositif thermo-générateur 101, et ainsi, pouvoir toujours chauffer et/ou refroidir l'eau 1 du bassin 2. L'intermittence du générateur d'électricité renouvelable 103 est donc sans impact sur la capacité du système 100 à thermoréguler l'eau 1, grâce à la source collective 3, utilisée en mode secteur. En mode renouvelable, le dispositif thermo-générateur 101 est alimenté par le générateur d'électricité renouvelable 103, permettant ainsi d'utiliser de l'énergie décarbonée produite localement à proximité du bassin 2.

L'unité de commande 105 commande le mode d'alimentation électrique du dispositif thermo-générateur 101. Sur commande de l'unité de commande 105, lorsque le système 100 est en mode secteur, le dispositif thermo-générateur 101 est alimenté par la source collective 3 via le raccordement électrique 102. Sur commande de l'unité de commande 105, lorsque le système 100 est en mode renouvelable, le dispositif thermo-générateur 101 est alimenté par le générateur d'électricité renouvelable 103 et n'est pas alimenté par la source collective 3 via le raccordement électrique 102.

Avantageusement, l'unité de commande 105 peut ajuster la consommation énergétique du dispositif thermo-générateur 101 afin de ne pas consommer plus que la puissance disponible en sortie du générateur d'électricité renouvelable 103. Le dispositif thermo-générateur 101 peut donc fonctionner en étant alimenté selon plusieurs gammes de puissances, de façon à pouvoir consommer seulement la puissance disponible. Par exemple, le dispositif thermo-générateur 101 a une puissance nominale de 1.5 kilowatt (kW). Dans le cas où le système 100 est en mode renouvelable, mais que le générateur d'électricité renouvelable 103, par exemple à cause de conditions météorologiques non optimales, ne fournit qu'une puissance de 1kW, l'unité de commande 105 ajuste la consommation du dispositif thermo-générateur 101 pour qu'il consomme seulement les 1 kW fournis par le générateur d'électricité renouvelable 103. Cela permet de limiter la consommation d'électricité uniquement à ce qui est généré par le générateur d'électricité renouvelable 103 lorsque le système 100 est en mode renouvelable, et d'éviter de recourir à l'électricité de la source d'électricité collective 3.

Selon un mode de réalisation particulièrement avantageux, l'utilisateur peut définir une température de consigne T souhaitée à l'aide de l'interface 106 de l'unité de commande 105, ainsi que, de préférence, la température maximale Tmax et une température minimale Tmin de l'eau 1 du bassin de baignade 2. Par exemple, l'utilisateur peut définir la température de consigne T comme étant à 28°C, la température minimale Tmin comme étant 25°C et la température maximale Tmax comme étant 30°C. De manière alternative, l'utilisateur peut définir la température de consigne T, ainsi qu'une tolérance autour de la température de consigne T, c'est-à-dire une valeur de température, définissant un intervalle dans lequel la température courante Tc pourra être comprise. Le calcul des températures minimale Tmin et maximale Tmax est alors effectué par l'unité de commande 105, en soustrayant la tolérance à la température de consigne T pour obtenir la température minimale Tmin et en additionnant la tolérance à la température de consigne T pour obtenir la température maximale Tmax. Par exemple, l'utilisateur peut définir la température de consigne T comme étant à 28°C et une tolérance de 2°C. Selon cet exemple, la température maximale Tmax calculée par l'unité de commande 105 est alors de 30°C et la température minimale Tmin calculée par l'unité de commande 105 est 26°C. Dans un mode de définition alternatif des températures, l'utilisateur peut définir une première tolérance pour le calcul de la température minimale Tmin et une deuxième tolérance différente de la première tolérance pour le calcul de la température maximale Tmax. Par exemple, l'utilisateur peut définir la température de consigne T comme étant 28°C, la première tolérance comme étant 1 °C et la deuxième tolérance comme étant 3°C. Dans ce cas, la température minimale Tmin est 27°C et la température maximale Tmax est 31 °C. La température maximale Tmax, ou minimale Tmin peut être égale à la température de consigne T.

Selon une variante non représentée, le dispositif thermo-générateur forme une unité de production de chaleur qui est une pompe à chaleur, et ne forme pas d'unité de refroidissement.

Selon une autre variante non représentée, le dispositif thermo-générateur forme une unité de production de chaleur qui est une pompe à chaleur, et le dispositif thermo-générateur forme également une unité de refroidissement, qui est un équipement distinct de la pompe à chaleur, par exemple un refroidisseur d'eau. L'unité de refroidissement, lorsqu'alimentée électriquement, peut refroidir l'eau du bassin de baignade, c'est-à-dire faire baisser la température courante.

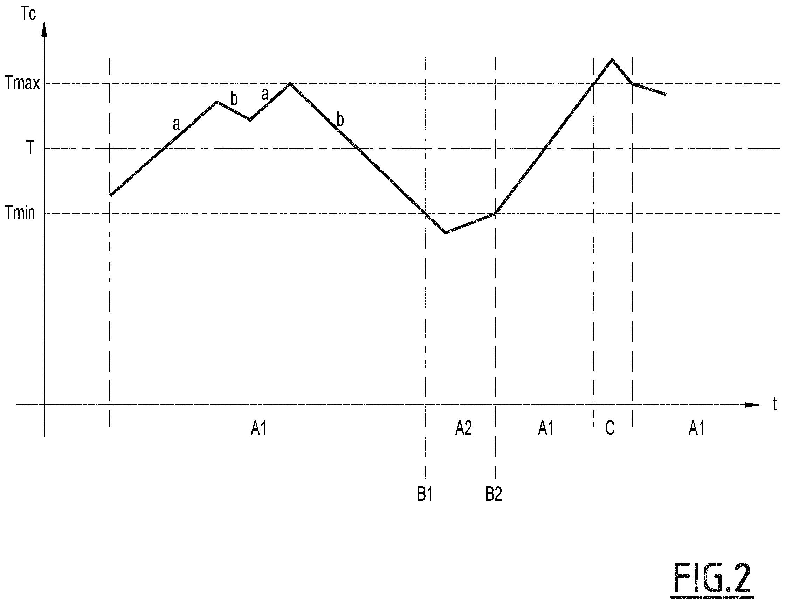

La figure 2 représente un graphe montrant un exemple de la température courante Tc en fonction du temps, pour illustrer un procédé de thermorégulation de l'eau 1 du bassin 2, mis en oeuvre à l'aide du système 100. Pendant une étape A1 du procédé, la température courante Tc est inférieure à la température minimale Tmin, le système 100 est en mode renouvelable, le générateur d'électricité renouvelable 103 alimente le dispositif thermo-générateur 101 et la source collective d'électricité 3 n'alimente pas le dispositif thermo-générateur 101. Pendant cette étape A1, l'unité de commande 105 commande le dispositif thermo-générateur 101 pour qu'il chauffe l'eau 1 du bassin de baignade 2. Du fait de ce chauffage, la température courante Tc augmente, comme montré sur les segments a. Lorsque le système 100 est en mode renouvelable et que l'électricité renouvelable n'est pas ou peu disponible, par exemple, car le générateur d'électricité renouvelable 103 est dans l'impossibilité de produire de l'électricité, par exemple à cause d'une absence de vent et/ou de soleil, le dispositif thermo-générateur 101 n'est pas capable de chauffer l'eau 1 du bassin de baignade 2 suffisamment pour contrer les pertes de chaleur. La température courante Tc baisse, montré sur les segments b.

Pendant une étape B1 du procédé, la température courante Tc devient inférieure à la température minimale Tmin. En conséquence, l'unité de commande 105 fait basculer le système 100 du mode renouvelable au mode secteur. L'unité de commande 105 modifie l'alimentation du dispositif thermo-générateur 101 pour qu'il soit alimenté par la source collective 3 par l'intermédiaire du raccordement électrique 102. L'unité de commande 105 met en fonctionnement le dispositif thermo-générateur 101 pour qu'il chauffe l'eau 1 du bassin de baignade 2.

Pendant une étape A2 du procédé, où la température courante Tc est inférieure à la température minimale Tmin, on prévoit que le système 100 soit en mode secteur. Autrement dit, sur commande de l'unité 105, le dispositif thermo-générateur 101 est alimenté par la source collective 3 pour chauffer l'eau 1 du bassin de baignade 2.

Pendant une étape B2, la température courante Tc devient supérieure à la température minimale Tmin. En conséquence, le système 100, sur commande de l'unité de commande 105, bascule du mode secteur au mode renouvelable. L'unité de commande 105 modifie l'alimentation électrique du dispositif de thermo-générateur 101, qui est alors alimenté par l'électricité issue du générateur d'électricité renouvelable 103. L'unité de commande 105 commande le dispositif de thermo-générateur 101 pour qu'il chauffe l'eau 1 du bassin de baignade 2.

Pendant une étape C, la température courante Tc devient supérieure à la température maximale Tmax. Alors, on prévoit que le système 100 soit en mode renouvelable. Si le dispositif thermo-générateur 101 forme une unité de refroidissement, alors l'unité de commande 105 arrête le fonctionnement du dispositif thermo-générateur 101 pour chauffer l'eau 1 du bassin de baignade 2 et commande la mise en fonctionnement du dispositif thermo-générateur 101 pour refroidir l'eau 1 du bassin de baignade 2. Si le dispositif thermo-générateur 101 ne forme pas d'unité de refroidissement, alors l'unité de commande 105 commande l'arrêt du dispositif thermo-générateur 101, pour cesser de chauffer l'eau 1 du bassin de baignade 2. Lorsque la température courante Tc devient inférieure à la température maximale Tmax, alors le système 100 fonctionne à nouveau selon l'étape A1, avec le fonctionnement expliqué ci-dessus.

Avoir la possibilité de chauffer l'eau 1 du bassin de baignade 2 jusqu'à la température maximale Tmax permet de stocker l'énergie sous forme de chaleur dans l'eau 1 du bassin 2, afin de retarder au maximum le recours à l'électricité issue de la source collective 3, en dépit de l'intermittence de la production du générateur d'électricité renouvelable 103. En effet, grâce à ce stockage de chaleur, la température courante Tc de l'eau 1 du bassin de baignade 2 met plus de temps à devenir inférieure à la température minimale Tmin que si l'eau 1 du bassin de baignade 2 avait été chauffée uniquement jusqu'à la température de consigne T. Pendant cet intervalle de temps, le dispositif thermo-générateur 101 n'est pas alimenté électriquement par l'électricité issue de la source collective d'électricité 3. Le stockage de chaleur s'effectue à partir de l'électricité du générateur d'électricité renouvelable 103, permettant également d'optimiser l'utilisation de l'électricité issue du générateur d'électricité renouvelable, plutôt que de la perdre, dans le cas où le système 100 est dépourvu d'autre moyen de stockage de l'électricité issue du générateur d'électricité renouvelable 103.

## Revendications

1. Système (100) de thermorégulation de bassin de baignade (2) contenant de l'eau (1), le système comprenant :
• une unité de production de chaleur (101), pour chauffer l'eau (1) du bassin de baignade (2), lorsque l'unité de production de chaleur est alimentée électriquement,
• un raccordement électrique (102), le système (100) étant configuré pour fonctionner dans un mode secteur dans lequel une source collective d'électricité (3) alimente l'unité de production de chaleur, par l'intermédiaire du raccordement électrique (102),
• un générateur d'électricité renouvelable (103), photovoltaïque et/ou éolien, le système (100) étant configuré pour basculer entre le mode secteur et un mode renouvelable dans lequel le générateur d'électricité renouvelable (103) alimente électriquement l'unité de production de chaleur et dans lequel l'unité de production de chaleur n'est pas alimentée par la source collective d'électricité (3),
• un capteur de température (104), pour mesurer une température courante de l'eau (1) du bassin de baignade (2), et
• une unité de commande (105) qui :
◆lorsque le système (100) est en mode renouvelable et tant que la température courante (Tc) est inférieure à une température maximale (Tmax) prédéterminée, commande l'unité de production de chaleur (105) pour chauffer l'eau (1) du bassin de baignade (2),
◆lorsque le système (100) est en mode secteur et tant que la température courante est inférieure à une température minimale (Tmin) prédéterminée, commande l'unité de production de chaleur pour chauffer l'eau (1) du bassin de baignade (2), la température minimale prédéterminée étant inférieure à la température maximale prédéterminée,
◆lorsque le système (100) est en mode renouvelable et que la température courante devient inférieure à la température minimale, fait basculer le système (100) en mode secteur, et
◆lorsque le système (100) est en mode secteur et que la température courante devient supérieure à la température minimale, fait basculer le système (100) en mode renouvelable.

2. Système (100) selon la revendication 1, dans lequel le générateur d'électricité renouvelable (103) est un générateur photovoltaïque.

3. Système selon l'une quelconque des revendications 1 ou 2, dans lequel l'unité de production de chaleur est une pompe à chaleur.

4. Système (100) selon l'une quelconque des revendications 1 à 3, comprenant une unité de refroidissement, alimentée électriquement par le générateur d'électricité renouvelable (103), pour refroidir l'eau (1) du bassin de baignade (2) lorsque la température courante est supérieure à la température maximale.

5. Système (100) selon la revendication 4, dans lequel l'unité de refroidissement et l'unité de production de chaleur sont formées par un même dispositif thermo-générateur (101), de préférence une pompe à chaleur, qui est apte à fonctionner alternativement selon un mode de production de chaleur et selon un mode de refroidissement.

6. Installation, comprenant le système de thermorégulation (100) selon l'une quelconque des revendications précédentes, ainsi que le bassin de baignade (2).

7. Installation selon la revendication 6, dans laquelle le bassin de baignade (2) est une piscine.

8. Installation selon l'une quelconque des revendication 6 et 7, dans laquelle, en mode renouvelable, lorsque la température maximale est atteinte, le générateur d'électricité renouvelable (103) alimente électriquement des équipements électriques domestiques (4, 5, 6).

9. Installation selon la revendication 8 dans laquelle les équipements électriques domestiques (4, 5, 6) comprennent des appareils (6) de pompage, de filtration et de traitement de l'eau (1) du bassin de baignade (2) et/ou des appareils électroménagers (4,5).

10. Procédé de thermorégulation d'un bassin de baignade (2) contenant de l'eau (1), au moyen du système (100) selon l'une quelconque des revendications 1 à 5, le procédé comprenant :
• une étape (A1) de chauffage du bassin de baignade (2) par l'unité de production de chaleur sur commande de l'unité de commande (104), lorsque le système (100) est en mode renouvelable et tant que la température courante est inférieure à la température maximale,
• une étape (A2) de chauffage du bassin de baignade (2) par l'unité de production de chaleur sur commande de l'unité de commande (104), lorsque le système (100) est en mode secteur et tant que la température courante est inférieure à la température minimale,
• une étape (B1) de basculement du mode renouvelable au mode secteur lorsque la température courante devient inférieure à la température minimale, et
• une étape (B2) de basculement du mode secteur au mode renouvelable lorsque la température courante devient supérieure à la température minimale.

11. Procédé selon la revendication 10, comprenant en outre une étape de définition d'une température de consigne (T) par un utilisateur, une étape de définition d'une tolérance par l'utilisateur et une étape de calcul des températures minimale (Tmin) et maximales (Tmax), respectivement en soustrayant la tolérance à la température de consigne (Tc), et en ajoutant la tolérance à la température de consigne (T).

12. Procédé selon l'une quelconque des revendications 10 et 11, comprenant en outre une étape (C) de refroidissement de l'eau (1) du bassin de baignade (2) lorsque la température courante (Tc) est supérieure à la température maximale (Tmax).

13. Procédé selon l'une quelconque des revendications 10 à 12, le procédé comprenant en outre, lorsque le système (100) est en mode renouvelable et que la température maximale (Tmax) de l'eau (1) du bassin de baignade (2) est atteinte, une étape d'alimentation par le générateur d'électricité renouvelable (103) d'équipements électriques domestiques (4, 5, 6).
